# EUROPEAN PATENT APPLICATION

(11) **EP 1 811 622 A1**
(43) Date of publication of application: **25.07.2007**
(21) Application number: 07425015.0
(22) Date of filing: 15.01.2007
(51) Int. Cl.: H02B 3/00, H02G 5/04

(54) **Device for facilitating the connection of contiguous prefabricated electric conduits**

(30) Priority: 24.01.2006 IT BS20060012
(71) Applicant: BBI Electric S.P.A., 25030 Torbole Casaglia (IT)
(72) Inventor: Petrone, Libero c/o BBI Electric S.P.A., I-25030 Torbole Casaglia (Brescia) (IT)
(74) Representative: Sangiacomo, Fulvia

(57) **Abstract**

The invention concerns a tool to facilitate the connection of rectilinear and/or angular contiguous conductor elements, in the formation of prefabricated electric conduits, each one having a framework or profile and busbars positioned in said profile and made to fit into those of another element by means of a connecting device. The tool comprises a manoeuvre lever (11) and two pull rods (12) connected to said lever, facing from opposite sides and each having end means (16, 17) to engage, in different positions and conditions, with the holes or openings (23) provided at least in two opposite sides of the profile of the conductor elements to be drawn together in response to an angular movement of said lever. The end means are provided to engage with the elements to be joined on one of their sides or crossways on two opposite sides.

## Description

### Field of the Invention

This invention concerns in general the prefabricated electric conduits field, the so called busbars, and refers in particular to a device used to facilitate the connection of the contiguous conductor elements of said electric conduits at the moment they are assembled to be placed in position.

### State of the Technique

Prefabricated electric conduits are electric lines that extend along predetermined paths. They are usually made up of rectilinear and angular elements, connected consecutively following a predetermined path and placed in position with the help of complementary components. The elements that contribute towards the formation of these prefabricated electric conduits are each mostly made up of a framework or profile and by several current conductor bars, positioned and lodged in the framework, insulated one from the other, with their ends open wide and prepared to receive the electric connection.

The formation of a prefabricated electric conduit is achieved by consecutively joining, according to requirements, a number of single rectilinear or angular elements by means of an electrical or mechanical joint using attachments, which have plates, placed one on top of the other in a pack, which fit comb like between the ends of the bars of the contiguous conductor elements as well as the blocking means.

The conductor elements however, are often cumbersome and heavy so that handling and connecting them in order to place them in position is laborious and burdensome also because it is carried out mostly by hand.

Even more so if you take into consideration the fact that in most cases assembling takes place above the floor or ground level in the air, where sometimes the space in which to manoeuvre is limited and not easily accessible because it is close to walls and/or ceilings. Furthermore the terminal parts of the conductor bars may not be well finished with flash or the like present which could cause jamming and require considerable force to complete the connection.

### Object of the Invention

This invention has been conceived to prevent these difficulties and therefore to facilitate the connection of the conductor elements for the formation of prefabricated electric conduits, and, in fact, its objective is to supply a tool which is able to grip and have the elements to be easily coupled, whatever the assembly condition, and even if the operation is manual.

Such an object is achieved with a tool which comprises a manoeuvre lever and two pull rods connected to said lever, facing in opposite directions and each one having end devices for engaging the framework of the conductor elements to be moved to connect to each other in response to an angular movement of said lever.

### Brief Description of the Drawings

The invention will, however, be described in detail from this point on in relation to the enclosed indicative and not restrictive drawings, in which:

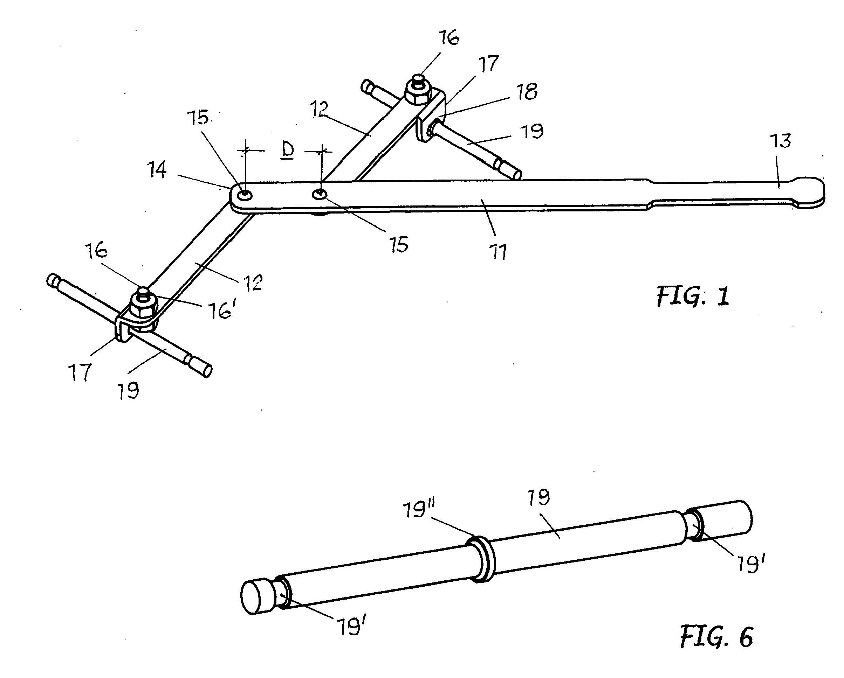

Fig. 1 shows a view in perspective of the tool in one of its operating settings;
Figs. 2 and 3 show a method of use of the tool for connecting the two conductor elements, respectively in a start and final position;
Figs. 4 and 5 show another method of use of the tool for connecting the two conductor elements, respectively in a start and final position; and
Fig. 6 shows the view of a rod to be used with the tool in the method of use in Figs. 4 and 5.

### Detailed Description of the Invention

As shown, the proposed tool comprises primarily a manoeuvre lever 11 and two pull rods 12. The lever 11 can be chosen according to the length required. It has a proximal grip end 13 and a distal end 14. The pull rods 12 are positioned at the distal end, facing from opposite sides of the lever and subject to rotation with respect to the latter.

The pull rods 12 are connected to the lever 11, each one by means of its respective pin 15, but at a certain distance D one from the other. Each pull rod 12 is provided at its free end with a connecting pin 16 and a tab 17, the latter crossed by a slot 18.

More in detail, the connecting pin 16 has, preferably a peripheral groove 16'. It is fixed to its respective pull rod 12 and protruding from the latter according to an X axis at a right angle to the plane holding the manoeuvre lever 11.

The tab 17 is placed at a right angle to the pull rod 12, on one side of the latter, also at right angle to the plane that holds the lever 12 and preferably facing in the opposite direction to the connecting pin 16.

Each pull rod 12 can also be provided with a drawlink 19 which fits into the slot 18 of its tab 17 to extend along a plane principally transversal to the pull rod and parallel to the manoeuvre lever.

The tool described above is used to engage and draw together two contiguous elements 20, 21 to be connected by interposition of a joining device 22 at the moment when an electric conduit or busbar, elements which may be the same or different, but each having a framework with at least one hole or opening 23 in each of two of its opposite sides 24, usually parallel to the coupling direction, are constructed.

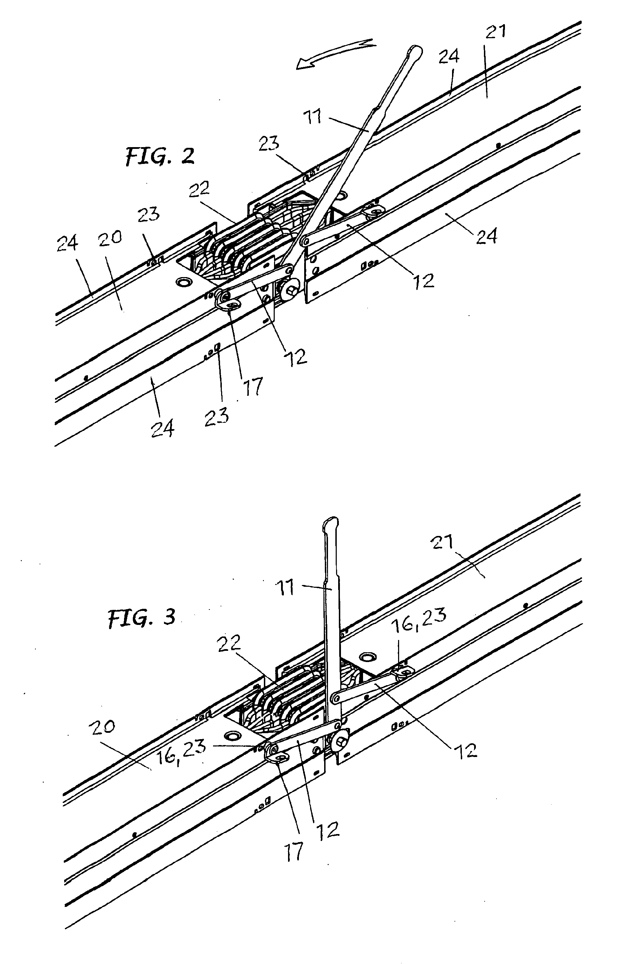

The tool can be used according to a first method by getting the connecting pins 16 of the pull rods 12, thanks to their groove 16', to engage with the holes or lateral slots 23 on the same side of the elements 20, 21 just placed together by the connecting neck as shown in Figs. 2 and 3. Therefore and evidently, the tool can be placed and used on one or the other side of the elements to be joined, either to the top or bottom parts of them, with the lever 11 facing either towards the top or bottom, depending on their position and spaces available for manoeuvring.

At the start the lever 11 is at a given angle with regards to the pull rods 12 and the latter are almost aligned. In this way, by turning the lever 11 in the direction of the arrow in Fig. 2 around a virtual fulcrum and variable in the interval between the pull rod pins, the engaged elements are drawn towards each other until they connect as shown in Fig. 3.

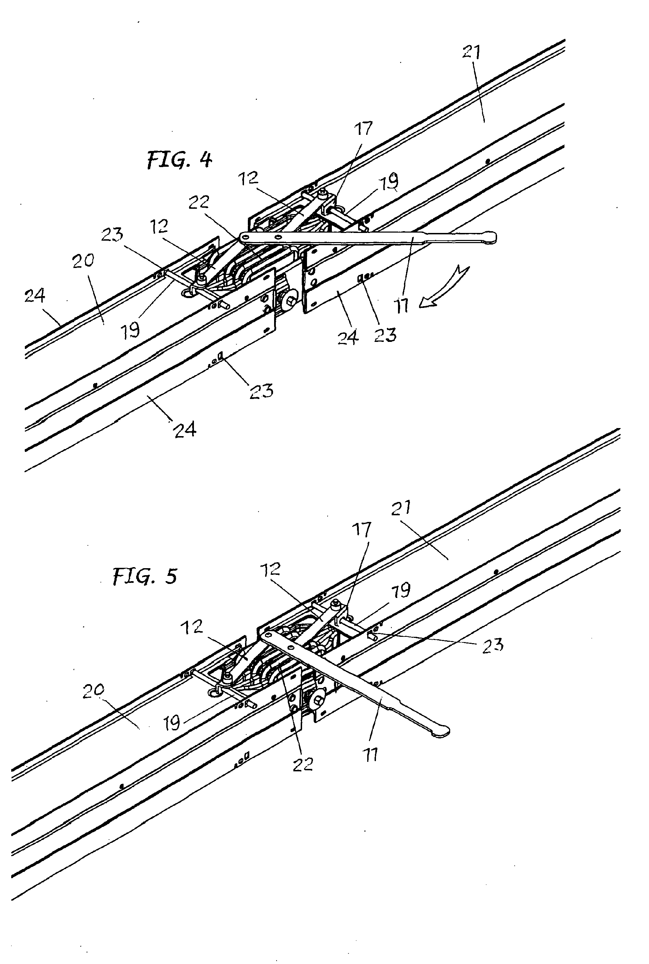

The tool can also be used according to another different way with the use of the drawlinks 19, each of which is inserted into the slot 18 of the tab of its respective pull rod 12 as well as in the holes or openings 23 of two opposite sides 24 of the elements 20, 21 to be connected in a crossways direction to the latter as shown in Figs. 4 and 5. In this case it can be used indiscriminately either in the top or bottom part of the elements to be connected in a centred position as to the latter. Once more by turning the lever according to the arrow in Fig. 4, from a start position to a final position the approach and connecting of the engaged elements will easily be achieved.

It should be noted that the drawlinks 19 will preferably be provided with annular grooves 19' at their opposite ends and a collar 19" in its intermediate part - Fig. 6. In this way the drawlinks 19, thanks to the annular grooves 19', can be centred and engaged, without axial movement" in the holes 23 of the opposite sides of the conductor elements to be connected, and, thanks to the intermediate collar 19", which rests against the tab 17 of the respective pull rod, hold the tool in a centred position as regards to the elements - Figs. 4 and 5.

## Claims

1. Tool to facilitate the connection of rectilinear and/or angular contiguous conductor elements, in the formation of prefabricated electric conduits, each one having a framework or profile and busbars positioned in said profile and made to fit into those of another element by means of a connecting device, **characterised in that** it comprises a manoeuvre lever (11) and two pull rods (12) connected to said lever, facing from opposite sides and each having end means (16, 17) to engage, in different positions and conditions, with the holes or openings (23) provided at least in two opposite sides of the profile of the conductor elements to be drawn together in response to an angular movement of said lever.

2. Tool according to claim 1, in which said pull rods (12) are connected to the lever (11), each by means of a pin (15) and at a distance one from the other.

3. Tool according to claims 1 and 2, in which each pull rod (12) is provided at its free end, with a connecting pin (16) orientated on a perpendicular axis to the plane holding the manoeuvre lever.

4. Tool according to claim 3, in which said connecting pin (16) has a peripheral groove (16') to engage with a hole or opening (23) on one side of a conductor element.

5. Tool according to claims 1 and 2, in which each pull rod (12) is provided at its free end with a square tab (17) with crossed by a slot (18) and positioned on a perpendicular plane on the plane holding the manoeuvre lever.

6. Tool according to claims 1 and 2, in which each pull rod (12) is provided at its free end with a connecting pin (16) orientated on a perpendicular axis to the plane holding the manoeuvre lever, and a square tab (17), also on a perpendicular axis to the plane holding the manoeuvre lever and crossed by a slot (18).

7. Tool according to claims 5 or 6, in which the tab (17) of each pull rod is associated with a drawlink (19) which fits into the slot (18) of the tab to as to be orientated crossways to a conductor element to be connected to another one and made to engage with the holes or openings (23) of two opposite sides of the profile of said conductor element.

8. Tool according to claim 7, in which the drawlink (19) is provided with annular grooves (19') at its ends, made to engage with said holes or openings in the sides of the conductor element and an intermediate support collar (19") of the tab (17) of its respective pull rod (12).
